Europäisches Patentamt

**European Patent Office**

Office européen des brevets

(11) Publication number: **0 134 866**
**A2**

(12) **EUROPEAN PATENT APPLICATION**

(21) Application number: **83307588.0**

(22) Date of filing: **13.12.83**

(51) Int. Cl.⁴: **F 16 K 3/12**
**F 16 K 1/32**

(30) Priority: **18.07.83 US 514503**

(43) Date of publication of application:
**27.03.85 Bulletin 85/13**

(84) Designated Contracting States:
**BE DE FR GB IT NL**

(71) Applicant: **KEROTEST MANUFACTURING CORPORATION**
**2525 Liberty Avenue**
**Pittsburgh Pennsylvania 15222(US)**

(72) Inventor: **Owoc, James R.**

**Deceased(US)**

(74) Representative: **Topps, Ronald et al,**
**D. YOUNG & CO 10 Staple Inn**
**London WC1V 7RD(GB)**

(54) **On-off valve.**

(57) A valve body includes a chamber for the flow of fluid between an inlet and an outlet thereto. The chamber includes an upper portion with an opening therethrough and a lower portion including a valve seat between the inlet and outlet openings. A valve seat insert is positioned in the valve seat and includes a pair of oppositely positioned ports communicating with the inlet and outlet openings. The valve seat insert is compressed to prevent leak paths between the valve body and the valve seat. A bonnet is positioned in the chamber upper portion and is connected to the valve body and extends upwardly therefrom. A stem is positioned for longitudinal movement in the bonnet and includes a lower portion for sealingly engaging the valve seat insert. An upper portion of the stem is connected to an actuator which extends upwardly and out of the bonnet. The stem upper portion is threadedly connected to the actuator, and the actuator is threadedly connected to the bonnet. The lead of the threaded connection between the stem and the actuator is in a direction opposite to the lead of the threaded connection between the actuator and the stem such that rotation of the actuator generates rapid nonrotational, longitudinal movement of the stem between the open and closed positions of the valve. A bellows surrounds the stem below the actuator to provide a seal around the stem between the valve body and the actuator. A stem restraining washer is clamped on the valve body in surrounding relation with the stem. Flats on the stem engage flats of the washer to prevent rotation of the stem upon rotation of the actuator to open and close the valve.

./...

Croydon Printing Company Ltd.

FIG. 1

# ON-OFF VALVE

This invention relates to a valve and more particularly to an on-off valve having a bellows sealed stem connected to a rotatable actuator positioned in a bonnet and operable to generate nonrotational, longitudinal movement of the stem which is restrained from rotating and is movable into and out of sealing relation with a valve seat insert forming the valve seat in the valve body.

Valves of the on-off type that include a reciprocal valve element to open and close the flow passage are well known in the art. Gate valves are on-off valves that include a valve stem having a lower end secured to a valve gate extending into a valve passageway. Rotation of an actuator in one direction produces rotation of the valve stem and responsive upward movement of the valve gate. Rotation of the actuator in the opposite direction produces downward movement of the valve gate. Within the valve body adjacent the flow passage are valve gate guides which cooperate with the moving valve gate to assist in effecting proper seating thereof. When the valve gate is closed, the valve gate is seated in the flow passageway of the valve housing so that the flow passageway is closed by the gate. Accordingly, when the valve gate is open, the valve gate is raised from the valve seats so that the flow passageway is open to provide unobstructed flow therethrough. An important feature of a gate valve is the seating of the valve gate with the valve seat to prevent leakage between the valve gate and the valve seat in the closed position. It is well known in the event of distortion of the valve gate that the valve gate will not sealingly engage the valve seat and will be displaced from sealing engagement. This results in leakage around the valve gate when the valve is in the closed position.

To solve the problem of displacement due to distortion of the valve gate when the valve housing is subjected to bending stresses, it has been suggested to provide a resilient member secured to the valve gate and operable to engage the valve seat to effect a seal. United States Patent 3,537,681 discloses a resilient member adhesively bonded to side walls of the valve gate or valve member. With this arrangement, the resilient member is operable to absorb stresses across the valve gate and to deflect in order to compensate for stresses induced by displacement or non-alignment of the valve seat.

United States Patent 2,870,987 discloses a resiliently sealed gate member in which each side of the gate member is provided with a resilient O-ring. The O-ring is held in place on the gate member to engage the valve seat in effecting a seal. In United States Patent 2,401,377 resilient sealing members are mechanically retained in recesses in the valve gate by means of rigid inserts which deform the sealing member. It is also known to utilize wedge-type valve gates as disclosed in United States Patent 3,088,705. This patent attempts to overcome the problems encountered with distortion of the valve body under internal pressure by stresses imposed on the valve body by adjoining piping to which it is connected. The gate member on opposite sides includes narrow recesses for receiving a metallic member which is retained in the recess by a mechanical locking ring.

It is also known as disclosed in United States Patent 3,572, 633 to utilize a valve seat retainer for holding a valve seat in a valve passageway that connects an inlet and an outlet of the valve body. The valve seat cooperates with the tip of a valve plug to control the flow between the inlet and the outlet. The retainer is held in place by a threaded connection to the valve body.

In United States Patent 3,189,319 a wedge-shaped closure member is attached for reciprocal movement to a valve stem. The valve closure member is guided by ribs in the valve casing into and out of sealing engagement with renewable valve seats mounted in the casing. The seats include a pair of telescoping annular members in which an outer member surrounds an inner member.

In the on-off valve disclosed in United States Patent 4,306, 583 a truncated valve member cooperates with a truncated cone of a seat of the valve body. The truncated valve member is provided with a plurality of O-ring type seals retained in recesses on the periphery of the truncated valve member. A valve stem is reciprocally movable through a passageway of the truncated valve member into and out of engagement with a valve seat provided in the truncated valve member. Inlet and outlet openings of the valve body communicate with the valve seat, and a metal-to-metal seal formed by engagement of the end of the valve stem with the valve seat interrupts flow through the valve seat. Other types of on-off valves that utilize metal-to-metal seals between the tip of the valve stem and the valve seat are disclosed in United States Patents 2,274,876; 2,765,143; 2,912,867; and 3,348,567.

While it has been suggested by the prior art devices to provide in an on-off valve, such as a gate valve, having resilient seals positioned between the valve seat and the valve closure member, either retained on the valve seat or on the valve closure member, to effect a fluid tight seal to prevent leakage between the valve seat and the valve closure member when the valve is in a closed position, the known devices utilize rather elaborate mechanical means for retaining the resilient seals in place. In particular, the arrangements for retaining the seals on the periphery of the valve closure member are complex in construction.

Therefore there is need to provide, in an on-off valve, an efficient seal arrangement between the valve seat and the valve closure member for preventing leak paths upwardly past the valve closure member. The on-off valve should provide high flow coefficients in which a fluid-tight seal is retained after prolonged use and is resistant to the affects of stresses applied to the valve body and valve stem, particularly in the control of corrosive and toxic fluids. The seal must be operable to withstand repeated opening and closing upon rapid actuation of the valve stem.

In accordance with the present invention, there is provided a valve having a valve body with a chamber therein. The chamber includes an upper portion with an opening therethrough and a lower portion having a valve seat. A valve seat insert is positioned in the valve seat and includes a pair of oppositely positioned ports. Inlet and outlet openings extend through the valve body and communicate with the valve seat insert ports and the valve seat. Retainer means positioned in the chamber upper portion and connected to the valve body in contact with the valve seat insert maintain the valve seat insert fixed in position in the valve seat. The retainer means includes a bearing surface in contact with the valve seat insert to compress the valve seat insert into sealing engagement with the valve body around the valve seat to prevent leak paths between the valve body and the valve seat insert. A bonnet is positioned in the chamber upper portion and is connected to the valve body above the retainer means. The bonnet has a passageway therethrough aligned with the chamber. A stem is positioned for longitudinal movement in the bonnet passageway. The stem includes a lower end portion extending into the chamber lower portion to sealingly engage the valve seat insert. The stem includes an upper end portion positioned in the bonnet passageway. An actuator is connected to the stem upper portion in the bonnet passageway and extends upwardly and out of the bonnet. The stem is connected to the actuator for longitudinal movement in the bonnet upon rotation of the actuator. Means is provided for restraining rotation of the stem lower end portion such that the stem nonrotatably, longitudinally moves into and out of engagement with the valve seat insert upon rotation of the actuator.

Another feature of the present invention includes the stem upper end portion being threaded, and the actuator having an internally threaded portion for receiving the stem threaded upper end portion. The actuator also includes an externally threaded portion connected to an internally threaded portion of the bonnet. The lead of the threaded connection between the stem and the actuator is in a direction opposite to the lead of the threaded connection between the actuator and the stem. With this arrangement, rotation of the actuator generates rapid nonrotational, longitudinal movement of the stem to open and close the valve.

Further in accordance with the present invention, the stem rotation restraining means is supported by the valve body in the chamber upper portion in underlying relation with the bonnet. The rotation restraining means surrounds the stem. Clamp means connected to the valve body urges the bonnet into compressive relation with the rotation restraining means to nonrotatably position the rotation restraining means in the valve body around the stem. The rotation restraining means includes a surface engaging a complementary surface of the stem to prevent rotation of the stem as the stem moves longitudinally to open and close the valve.

Some embodiments of the present invention will be described, by way of examples, with references to the accompanying drawings, in which:

Figure 1 is a sectional view in side elevation of an on-off valve,

Figure 2 is a sectional view taken along line II-II of Figure 1, illustrating the means for restraining rotation of the valve stem as it moves longitudinally,

Figure 3 is a sectional view taken along line III-III of Figure 1, illustrating the valve stem portion extending through a valve seat retainer which is threaded into the valve body.

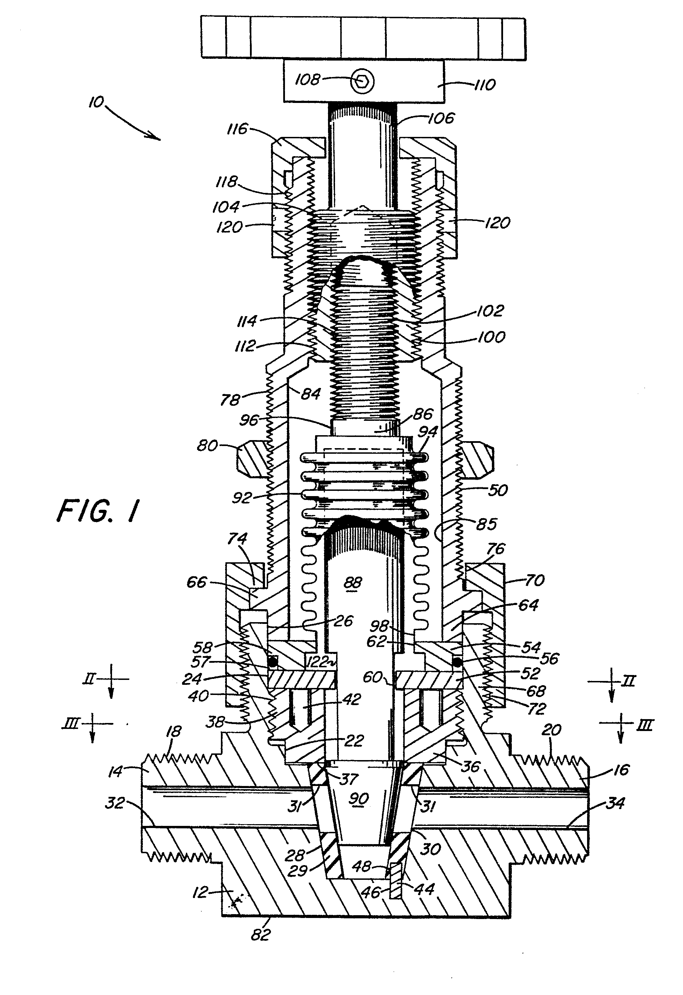

Referring to Figure 1, there is illustrated a full ported on-off valve generally designated by the numeral 10 for interrupting and permitting the flow of fluid, such as a corrosive, toxic, or expensive liquid or gas, through a piping system in which the valve 10 is operable to provide an uninterrupted flow path through the piping system. The valve 10 includes a valve body 12 having a pair of conduit portions 14 and 16 that preferably include externally threaded portions 18 and 20 adapted to receive suitable compression couplings for connection to the conduits of the piping system.

The valve body 12 includes a chamber 22 having an upper portion 24 with an opening 26 therethrough and a lower portion 28 having a valve seat 30 therein. The conduit portions 14 and 16 include openings 32 and 34 respectively, communicating with the valve seat 30 for fluid flow through a valve passageway formed by the conduit portions 14 and 16 and the valve seat 30.

The valve seat 30 has a conical configuration adapted to receive a valve seat insert 29. The valve seat insert 29 has a configuration cooperating with the valve seat 30. The valve seat insert 29 abuts the lower surface of the chamber lower portion 28. The valve seat insert 29, preferably manufactured of chemically resistant plastic, has a preselected thickness and includes a pair of oppositely positioned ports 31 which are aligned and communicate with the openings 32 and 34 in the valve body 12.

A seat retainer 36 positioned in the valve chamber upper portion 24 maintains the valve seat insert 29 in position in the valve seat 30 so that the valve seat insert ports 31 remain aligned with the openings 32 and 34 in the valve body. The seat retainer 36 includes a lower bearing surface 37 that is positioned in abutting relation with the upper surface of the valve seat insert 29. An externally threaded portion 38 of the retainer 36 is threadedly engaged to internally threaded portion 40 of the valve body 12 in the chamber upper portion 24. Preferably, the seat retainer 36 includes spanner holes 42 adapted to receive a spanner wrench for threadedly advancing the retainer 36 into the chamber threaded portion 40 to apply a compressive force upon the seat insert 29. The seat insert 29 is compressed to the extent that it is tightly wedged into engagement with the valve seat 30. This arrangement prohibits the formation of leak paths between the insert 29 and the portion of the valve body 12 forming the valve seat 30. While the seat retainer 36 maintains the seat insert 29 longitudinally fixed in the valve seat 30, an antirotation pin 44 maintains the insert 29 nonrotatably fixed in the valve seat 30. The pin 44 extends into a recess 46 of the valve body 12 at one end and into a recess 48 in the insert 29 at the opposite end. The pin 44 maintains the valve body openings 32 and 34 aligned with the insert ports 31.

A bonnet 50 is positioned in the chamber upper portion 24 and closes the opening 26 therein. Positioned between the lower end of the bonnet 50 and the seat retainer 36 is a C-washer 52 and a bellows plate 54. The C-washer 52 rests on the seat retainer 36 and is operable, as will be explained later in greater detail, to restrain stem rotation. The C-washer 52 includes an upper surface for receiving the bellows plate 54. An O-ring 56 is positioned in a recess 57 formed by a bellows plate shoulder 58 and the upper surface of the C-washer 52 around the bellows plate 54. The O-ring 56 forms a seal between the valve body 12 and the bellows plate 54 above the C-washer 52.

The C-washer 52 includes an opening 60 axially aligned with a bore 62 through the bellows plate 54. The bonnet 50 has a lower end portion 64 that bears downwardly on the bellows plate 54. The lower end portion 64 includes an external shoulder 66 positioned above the valve body 12. The valve body 12 includes an externally threaded portion 68 positioned below the bonnet shoulder 66. A union nut 70 having an internally threaded bore 72 and an internal shoulder 74 surrounding a bore 76 is positioned around the bonnet lower end portion 64 and the valve body threaded portion 68. The nut internally threaded bore 72 engages the valve body externally threaded portion 68 so that the nut shoulder 74 bears downwardly upon the bonnet shoulder 66. In this manner, the bonnet lower end portion 64 firmly clamps the bellows plate 54 and the C-washer 52 in place on the seat retainer 36 which in turn is securely supported by the valve body 12. The union nut 70 is threadedly advanced onto the valve body 12 until the C-washer 52 is securely fixed between the bellows plate 54 and the seat retainer 36 preventing rotation of the C-washer 52 in the valve chamber upper portion 24.

The bonnet 50 includes an externally threaded portion 78 above the union nut 70 and is adapted to receive a jam nut 80. The jam nut 80 is operable to permit panel mounting of the valve 10. In the alternative, the valve body 12 at a lower surface 82 can be provided with tapped holes (not shown) to facilitate bottom mounting of the valve 10.

The bonnet 50 has a passageway 84 therethrough aligned with the valve body chamber 22. A valve stem 86 is positioned in the bonnet passageway 84 and includes a lower end portion 88 positioned in the chamber lower portion 28. The stem lower end portion 88 includes a conical tip 90 operable to move into and out of sealing engagement with the conical seat insert 29 upon longitudinal reciprocal movement of the valve stem 86 in the bonnet passageway 84. In the closed position of the valve 10, as illustrated in Figure 1, the conical tip 90 sealingly engages the valve seat insert 29 to prevent fluid flow through the valve body 12 between the openings 32 and 34. In open position of the valve 10, the stem conical tip 90 is raised out of contact with the valve seat insert 29 to permit full and uninterrupted flow between the openings 32 and 34 and through the valve seat 30.

Complete valve shut-off is obtained when the conical stem tip 90 is fully engaged, as illustrated in Figure 1, in the valve seat insert 29. The conical configuration of the valve seat insert 29 is complementary to the conical configuration of the stem tip 90. As the stem tip 90 is driven down into the valve seat insert 29, the tip 90 becomes wedged into engagement with the seat insert 29 to provide an effective seal around the ports 31 of the seat insert 29, thereby preventing fluid flow through the seat insert ports 31 and the valve body 12.

The wedging action of the tip 90 in the insert 29 aids in the compression of the insert 29 with the walls of the chamber lower portion 28 around the valve seat 30. This arrangement effectively prevents leak paths from forming between the interface of the seat insert 29 and the valve body 12 in the area of the valve seat 30. As discussed above, the provision of the anti-rotation pin 44 maintains concentricity of the insert ports 31 with the valve openings 32 and 34. The seat insert 29 is thus prevented from rotating as the valve 10 is opened and closed.

A fluid impervious bellows 92 surrounds the valve stem lower end portion 88 in the bonnet passageway 84. The bellows 92 is preferably fabricated of metallic material, such as stainless steel, and includes an upper end portion 94 welded to an integral flange 96 on the valve stem 86. A lower end portion 98 of the bellows 92 extends into the bore 62 of the bellows plate 54 and is welded to the bellows plate 54.

The bellows 92 hermetically seals the stem lower end portion 88 within a primary pressure boundary that contains the fluid flowing through the valve 10 within the bellows 92 around the stem 86. In the event fluid leaks upwardly through the valve seat insert 29 and around the stem 86 into the valve chamber upper portion 24, the fluid is contained within the bellows 92. As will be explained later in greater detail, the stem 86 is nonrotatably, longitudinally movable in the bonnet passageway 84. As the stem 86 is moved into and out of sealing engagement with the valve seat insert 29, the bellows 92 is longitudinally expandable and retractable to maintain a hermetic seal around the stem lower end portion 88.

The bonnet passageway 84 includes a lower end portion 85 for receiving the bellows 92 and the stem lower end portion 88. The bonnet passageway 84 also includes an upper end portion 100 for receiving a threaded upper end portion 102 of stem 86. An actuator 104 is positioned in the bonnet passageway upper end portion 100 between the stem upper end portion 102 and the bonnet 50. The actuator 104 includes an upper end portion 106 connected by set screws 108 to a rotatable knob or handle 110. An externally threaded lower end portion 112 of the actuator 104 is rotatably received within the threaded upper end portion 100 of the bonnet passageway 84.

The actuator 104 includes an internally threaded bore 114 for threadedly receiving the stem threaded upper end portion 102 to connect the stem 86 to the actuator 104. In accordance with the present invention, the lead of the threaded connection between the stem upper end portion 102 and the internally threaded bore 114 of the actuator 104 is in a direction opposite to the lead of the threaded connection between the externally threaded portion 112 of the actuator 104 and the internally threaded portion 100 of the bonnet passageway 84. In an operative example, the threaded connection between the bonnet 50 and the actuator 104 is a right-hand double lead Acme thread, and the threaded connection between the valve stem 86 and the actuator 104 is a left-hand single lead Acme thread.

In operation to effect valve closure from the open position, the handle 110 is rotated, for example, in a clockwise direction thereby rotating the actuator 104 in the bonnet passageway upper end portion 100. Rotation of the actuator 104 generates nonrotational, longitudinal movement of the valve stem 86. This manner of connecting the valve stem 86 to the actuator 104 and the actuator 104 to the bonnet 50 provides rapid stem movement in response to rotation of the handle 110 to effect opening and closing of the valve 10.

A bonnet cap 116 is threadedly connected to an externally threaded portion 118 of the bonnet 50. The axial position of the bonnet cap 116 is fixed on the bonnet 50 by set screws 120, locking the cap 116 to the bonnet 50. With this arrangement, the bonnet cap 116 limits upward movement of the stem when the valve 10 is in the fully opened position by prohibiting the actuator 104 from upward axial movement by abutting contact with the cap 116.

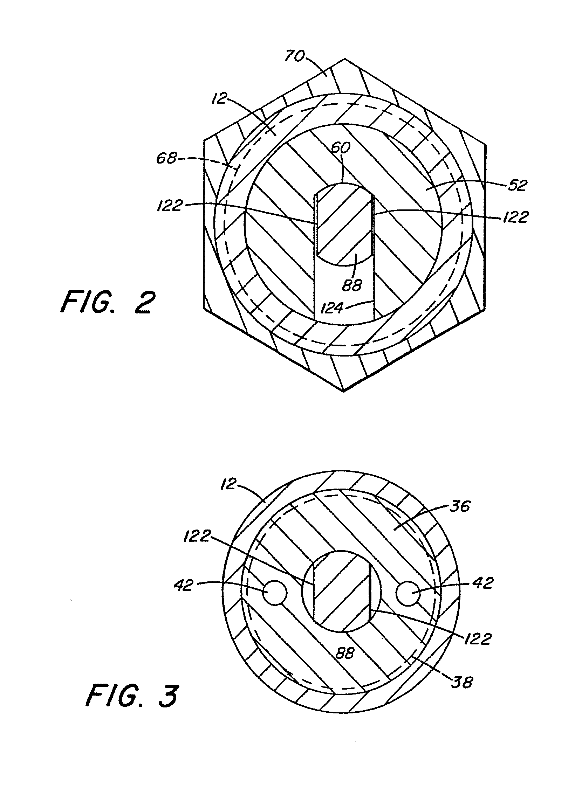

As above described, the C-washer 52 is operable to restrain rotation of the valve stem 86 such that the stem conical tip 90 nonrotatably, longitudinally moves into and out of sealing engagement with the valve seat insert 29 upon rotation of the handle 110. Restraint of rotation of the valve stem 86 by the C-washer 52 is accomplished, as illustrated in Figure 2, by the provision of planar surfaces or flats 122 on opposed sides of the stem lower end portion 88 where the flats 122 are connected by the arcuate portions of the valve stem lower end portion 88.

The C-washer 52 is provided with a transverse slot 124 having a width adapted to receive in substantially abutting relation the stem lower end portion 88 where the flats 122 on the stem lower end portion 88 abut the planar surfaces of the slot 124. The slot 124 extends from the periphery of the C-washer 52 to the opening 60 of the C-washer so as to receive the valve stem lower end portion 88. Accordingly, the washer 52 is oriented so that the stem flats 122 coact with the planar surfaces of the washer slot 124. Also as above discussed, the C-washer 52 is restrained from rotational movement in the valve chamber upper end portion 24 by the clamping action generated by the downward pressure applied by the bonnet 50 upon the bellows plate 54. The bellows plate 54, in turn, applies a downward compressive force upon the C-washer 52 maintained longitudinally fixed on the seat retainer 36 connected to the valve body 12. Thus, when the union nut 70 is tightened on the valve body 12, the lower end portion 64 of the bonnet 50 bears upon the bellows plate 54 to clamp the C-washer 52 in place on the seat retainer 36.

With the valve stem 86 being restrained from rotational movement as above described, the above described threaded connection of the valve stem 86 to the actuator 104 and the actuator 104 to the bonnet 50 permits rapid motion of the valve stem 86 between an open position providing an uninterrupted flow path through the valve 10 and a closed position interrupting the flow path. Thus, the on-off valve 10 of the present invention is readily adaptable for controlling high-pressure flow of toxic fluids in a fully ported bellows sealed valve where rapid actuation of the valve stem is required between the open and closed positions so that, in the open position, an uninterrupted flow path is provided and in the closed position, an effective seal is formed at the valve seat to prevent leakage through the flow path or upwardly around the valve stem.

12    0134866

CLAIMS

1.    A valve comprising, a valve body having a chamber therein, said chamber including an upper portion with an opening therethrough and a lower portion having a valve seat, a valve seat insert positioned in said valve seat including a pair of oppositely positioned ports, inlet and outlet openings extending through said valve body and communicating with said valve seat insert ports and said valve seat, retainer means positioned in said chamber upper portion and connected to said valve body in contact with said valve seat insert for maintaining said valve seat insert fixed in position in said valve seat, said retainer means including a bearing surface in contact with said valve seat insert to compress said valve seat insert into sealing engagement with said valve body around said valve seat to prevent leak paths between said valve body and said valve seat insert, a bonnet positioned in said chamber upper portion and connected to said valve body above said retainer means, said bonnet having a passageway therethrough aligned with said chamber, a stem positioned for longitudinal movement in said bonnet passageway, said stem including a lower end portion extending into said chamber lower portion to sealingly engage said valve seat insert, said stem including an upper end portion positioned in said bonnet passageway, an actuator connected to said stem upper end portion in said bonnet passageway and extending upwardly and out of said bonnet, said stem being connected to said actuator for longitudinal movement in said bonnet upon rotation of said actuator, and means for restraining rotation of said stem lower end portion such that said stem nonrotatably, longitudinally moves into and out of engagement with said valve seat insert upon rotation of said actuator.

2.    A valve as set forth in claim 1 in which, said valve seat has a conical configuration, said valve seat insert having a conical configuration complementary with said conical configuration of said valve seat, and said valve seat insert being compressed by said retainer means into wedging engagement with said valve seat to maintain said valve seat insert longitudinally fixed in said valve seat.

3.      A valve as set forth in claim 2 in which, said stem lower end portion has a conical tip operable to move into and out of sealing engagement with said conical valve seat insert, said stem lower end portion sealingly engaging said valve seat insert upon closure of said valve to prevent fluid flow through said valve body between said ports, and said stem conical tip upon closure of said valve being driven down into said valve seat insert and into wedging engagement with said valve seat insert to provide an effective seal around said ports.

4.      A valve as set forth in claim 3 in which, said stem conical tip is movable into wedging engagement with said valve seat insert to compress said valve seat insert against said valve seat to prevent leak paths from forming between the interface of said valve seat insert and said valve body around said valve seat.

5.      A valve as set forth in claim 1 which includes, an antirotation pin for maintaining said valve stem insert nonrotatably fixed in said valve seat, said valve body including a recess extending downwardly from said valve seat, said valve seat insert including a recess oppositely aligned with said valve body recess, said pin extending into said valve body recess at one end and into said valve seat insert recess at the opposite end, and said pin preventing said valve stem insert from rotating as the valve is opened and closed so that said valve seat insert ports remain aligned with said inlet and outlet openings.

6.      A valve as set forth in claim 1 in which said means for restraining rotation of said stem lower end portion includes, a washer positioned around said valve stem between the lower end of said bonnet and said retainer means, means for preventing rotation of said washer relative to said stem, said washer having an opening for receiving said stem, said opening communicating with a transverse slot in said washer, said transverse slot having a width adapted to receive said stem, said transverse slot having opposed planar surfaces, said stem having opposed

14

**0134866**

<u>Claim 6 - continued</u>

planar surfaces, said washer being positioned around said stem such that said washer planar surfaces coact with said stem planar surfaces to restrain rotation of said stem upon rotation of said actuator to open and close the valve.

7. A valve as set forth in claim 1 in which, said chamber upper portion includes an internally threaded portion, said retainer means including an externally threaded portion threadedly engaged to said chamber upper portion internally threaded portion, and said retainer means including spanner holes for receiving means for threadedly advancing said retainer means into said chamber upper portion to apply a compressive force upon said valve seat insert.

8. A valve comprising, a valve body having a chamber therein, said chamber including an upper portion with an opening therethrough and a lower portion having a valve seat, inlet and outlet openings extending through said valve body and communicating with said valve seat, a bonnet positioned in said chamber upper portion and connected to said valve body, said bonnet having a passageway therethrough aligned with said chamber, said passageway having an internally threaded portion, a stem positioned for longitudinal movement in said bonnet passageway, said stem including a lower end portion extending into said chamber lower portion to sealingly engage said valve seat, said stem including an upper end portion positioned in said bonnet passageway, said stem upper end portion including a threaded portion, an actuator positioned in said bonnet passageway between said valve stem and said bonnet, and said actuator having an internally threaded portion connected to said stem upper threaded portion and an externally threaded portion connected to said bonnet internally threaded portion where the lead of the threaded connection between said stem and said actuator is in a direction opposite to the lead of the threaded connection between said actuator and said bonnet such that rotation of said actuator generates rapid nonrotational, longitudinal movement of said stem to open and close the valve.

9. A valve as set forth in claim 8 in which, said actuator externally threaded portion is connected to said bonnet internally threaded portion by a right-hand, double lead acme threaded connection.

10. A valve as set forth in claim 8 in which, said stem upper threaded portion is connected to said actuator internally threaded portion by a left-hand single lead acme threaded connection.

11. A valve as set forth in claim 8 in which, said actuator upon rotation in a preselected direction generates nonrotational, longitudinal movement of said valve stem to provide rapid stem movement in response to rotation of said actuator to effect opening and closing of said valve.

12. A valve as set forth in claim 8 which includes, said bonnet having an externally threaded portion, a bonnet cap threadedly connected to said bonnet externally threaded portion, and means for axially fixing the position of said bonnet cap on said bonnet so that said bonnet cap limits upward movement of said stem when said valve is open by preventing upward movement of said actuator upon contact with said bonnet cap.

13. A valve comprising, a valve body having a chamber therein, said chamber including an upper portion with an opening therethrough and a lower portion having a valve seat, a bonnet positioned in said chamber upper portion and connected to said valve body, said bonnet having a passageway therethrough aligned with said chamber, a stem positioned for longitudinal movement in said bonnet passageway, said stem including a lower end portion extending into said chamber lower portion to sealingly engage said valve seat, said stem including an upper end portion positioned in said bonnet passageway, an actuator connected to said stem upper end portion in said bonnet passageway and extending upwardly and out of said bonnet, said stem being connected to said actuator for longitudinal movement in said bonnet upon rotation of

Claim 13 - continued

said actuator, rotation restraining means supported by said valve body in said chamber upper portion in underlying relation with said bonnet and surrounding said stem for prohibiting stem rotation, clamp means connected to said valve body for urging said bonnet into compressive relation with said rotation restraining means to nonrotatably position said rotation restraining means in said valve body around said stem lower end portion, said rotation restraining means including a surface engaging said stem to prevent rotation of said stem while permitting longitudinal movement of said stem upon rotation of said actuator to open and close the valve, a bellows surrounding said stem lower end portion in said bonnet passageway, said bellows having an upper end and a lower end, and means for connecting said bellows upper end to said stem below said actuator and said bellows lower end to said valve body to provide a seal around said valve stem.

14.    A valve as set forth in claim 13 which includes, a valve seat retainer positioned in said chamber upper portion and spaced below said bonnet, said rotation restraining means positioned on said valve seat retainer, a bellows plate positioned on said rotation restraining means and surrounding said valve stem, said bonnet bearing downwardly on said bellows plate, and said clamp means being movable on said valve body into compressive engagement with said bonnet to urge said bonnet downwardly into compressive relation with said bellows plate to clamp said rotation restraining means between said bellows plate and said valve seat retainer and prevent rotation of said rotation restraining means in said chamber upper portion.

15.    A valve as set forth in claim 14 in which, said clamp means includes a nut having an internally threaded bore and an internal shoulder within said internally threaded bore, said internally threaded bore threadedly connected to said valve body, said bonnet having an

Claim 15 - continued

externally threaded portion for receiving said nut, said bonnet including an external shoulder positioned oppositely of said nut internal
shoulder, and said nut being advanced downwardly on said valve body to
compress said nut internal shoulder downwardly on said bonnet external
shoulder and move said bonnet downwardly into compressive relation with
said bellows plate until said rotation restraining means is securely
fixed between said bellows plate and said valve seat retainer.

16.      A valve as set forth in claim 13 in which, said rotation
restraining means includes a washer positioned around said valve stem,
said washer having internal flats, said stem having external flats, and
said washer being positioned on said stem such that said washer internal
flats coact with said stem external flats to restrain rotation of said
stem upon rotation of said actuator to open and close the valve.

17.      A valve as set forth in claim 13 in which, said bellows upper
end is welded to said stem, a bellows plate positioned on said rotation
restraining means and surrounding said valve stem, said bellows plate
including a bore therethrough, and said bellows lower end extending
into said bore and being welded to said bellows plate in surrounding
relation with said valve stem to hermetically seal said stem lower end
portion within a primary pressure boundary that contains fluid flowing
through said valve within said bellows around said stem.

18.      A valve as set forth in claim 17 which includes, a seal
member positioned in surrounding sealing relation with said bellows
plate above said rotation restraining means and within said chamber
upper portion to form a pressure boundary interface between said bonnet
and said valve body.

FIG. I

FIG. 2

FIG. 3